# EUROPÄISCHE PATENTANMELDUNG

(11) **EP 4 339 724 A1**
(43) Veröffentlichungstag der Anmeldung: **20.03.2024**
(21) Anmeldenummer: 23196809.0
(22) Anmeldetag: 12.09.2023
(51) Int. Cl.: G05B 19/4069

(54) **SYSTEM UND VERFAHREN ZUR MASCHINENNAHEN PROGRAMMABLAUFSIMULATION BEI WERKZEUGMASCHINEN**

(30) Priorität: 13.09.2022 DE 102022123281
(71) Anmelder: CHIRON Group SE, 78532 Tuttlingen (DE)
(72) Erfinder: Schröder, Pascal, 78532 Tuttlingen (DE); Kohli, Domenik, 78579 Neuhausen ob Eck (DE)
(74) Vertreter: Witte, Weller & Partner Patentanwälte mbB

(57) **Zusammenfassung**

Ein System (100) zur Simulation des Programmablaufs bei einer Werkzeugmaschine (10) umfasst eine Werkzeugmaschine (10) mit einem Werkzeughalter (22) und einer Werkstückaufnahme (26), die in zumindest drei Achsen (40, 42, 44) relativ zueinander verfahrbar sind, eine der Werkzeugmaschine (10) zugeordnete Maschinensteuereinheit (60), die Bewegungen der zumindest drei Achsen (40, 42, 44) steuert. Die Maschinensteuereinheit (60) arbeitet ein Bearbeitungsprogramm ab und erzeugt auf Basis von Bearbeitungsprogrammdaten (102) Maschinensteuerdaten (106) für die zumindest drei Achsen (40, 42, 44), die als Achssteuerdaten (116) den zumindest drei Achsen (40, 42, 44) zur Bearbeitung eines realen Werkstücks (24) in einer ersten Zeitebene (92) zuführbar sind. Eine mit der Maschinensteuereinheit (60) gekoppelte Simulationseinheit (86) greift unter Umgehung der Bearbeitungsprogrammdaten (102) auf die von der Maschinensteuereinheit (60) erzeugten Maschinensteuerdaten (106) zu und verarbeitet diese zu Simulationszwecken zur Bearbeitung eines virtuellen Werkstücks (84) in einer zweiten Zeitebene (94). Eine Bedienerschnittstelle (70) weist ein Steuerelement auf, das bedarfsweise die Übermittlung der Achssteuerdaten (116) an die zumindest drei Achsen (40, 42, 44) unterbricht und einen Direktsimulationsmodus der Simulationseinheit (86) aktiviert, in dem die Simulationseinheit (86) auf die Maschinensteuerdaten (106) zugreift und analog zu der Bearbeitung des realen Werkstücks (24) eine Bearbeitung des virtuellen Werkstücks (84) in der ersten Zeitebene (92) durchführt. Ein korrespondierendes Verfahren dient zur Simulation des Programmablaufs bei Werkzeugmaschinen (10).

## Beschreibung

Die vorliegende Offenbarung bezieht sich auf ein System und ein Verfahren zur maschinennahen Programmablaufsimulation bei Werkzeugmaschinen.

Aus der WO 2009/037154 A2 ist eine Werkzeugmaschine bekannt, die ein Bedienerunterstützungssystem aufweist, das unabhängig von einer Maschinensteuerung der Werkzeugmaschine arbeitet und einem Bediener ermöglichen soll, parallel zum Einrichten oder zum Bearbeiten eines Werkstücks zusätzliche Informationen über dieses Werkstück oder über das nächste zu bearbeitende Werkstück zu studieren.

Aus der EP 0 671 677 B1 ist ein Verfahren zur Erstellung eines Bearbeitungsprogramms auf der Grundlage von CAD-Konstruktionsdaten und im Voraus in einer Datenbank gespeicherten Bearbeitungsbedingungen bekannt, wobei Informationen über den Bearbeitungsstatus von einer Bearbeitungsstation bezogen werden. Auf der Grundlage des Bearbeitungsprogramms und der Informationen über den Bearbeitungsstatus wird ein Bearbeitungszustand simuliert, um anschließend NC-Bearbeitungsbefehle vorzubereiten.

Aus der EP 1 018 677 B1 ist ein virtuelles Teach-In-Modul zur Programmierung von Werkzeugmaschinen bekannt, das eine visuelle Darstellung eines Werkstücks und eines Werkzeugs erbringt, die Manipulation der Darstellung durch Bewegung des dargestellten Werkstücks und des dargestellten Werkzeugs gestattet und anhand der Manipulation ein Maschinensteuerprogramm erzeugt oder verändert.

Im Sinne der vorliegenden Offenbarung ist eine maschinennahe Programmablaufsimulation eine Simulation, bei der eine Simulationseinheit mit einer Maschinensteuereinheit einer Werkzeugmaschine interagiert. Interaktion kann die Übermittlung bzw. den Austausch von Informationen umfassen.

Die Automatisierung von Werkzeugmaschinen schreitet stetig voran. Ein Trend ist die Bereitstellung eines sogenannten digitalen Zwillings der Werkzeugmaschine, der eine genaue Simulation des Betriebs der Werkzeugmaschine bzw. der Bearbeitung erlaubt. Es wird also beispielsweise zur Simulation einer Bearbeitung nicht nur ein Materialabtrag, sondern zusätzlich auch das Verhalten weiterer Komponenten der Werkzeugmaschine simuliert. In dieser Hinsicht geht die Simulation mit einem digitalen Zwilling über die reine CNC-Simulation hinaus.

Ein digitaler Zwilling kann während der Bearbeitung parallel zur realen Bearbeitung eine simulierte Bearbeitung durchführen. Dies wird beispielhaft zur sogenannten Kollisionsvermeidung genutzt, um im Fall der Fälle anhand des Verhaltens des digitalen Zwillings einen drohenden Crash oder sonstige unerwünschte Betriebszustände frühzeitig erkennen zu können. Idealerweise kann dann die reale Werkzeugmaschine gestoppt oder anderweitig beeinflusst werden, um diesen unerwünschten Zustand oder gar Crash zu vermeiden. Für die Kollisionsvermeidung ist es üblich, dass die simulierte Bearbeitung auf dem digitalen Zwilling der realen Bearbeitung etwas vorausläuft. Der Zeitversatz beträgt beispielsweise einige Zehntelsekunden.

Es hat sich jedoch gezeigt, dass beispielsweise in der Einzelfertigung und/oder bei der Bearbeitung hochwertiger Teile aus teuren Werkstoffen weitere Ansätze zur Unterstützung der Arbeitsvorbereitung und der eigentlichen Bearbeitung wünschenswert sind. Dies ist nicht einschränkend zu verstehen und grundsätzlich auch bei anderen Anwendungen wünschenswert.

Es ist vorstellbar, dass gerade bei der realen Bearbeitung eines Bauteils in Einzelfertigung während der Bearbeitung für einen Bediener ein unerwünschter Zustand erkennbar wird, der rein aus Sorgfaltsgründen einen Abbruch der realen Bearbeitung rechtfertigen kann. Das kann auch in solchen Situationen auftreten, bei denen die Bearbeitung womöglich erfolgreich durchführbar wäre. Ein Beispiel ist eine drohende Beinahe-Kollision, die zunächst zum Abbruch der Bearbeitung führt, aber andererseits im Falle der Durchführung der Bearbeitung nicht zu einer tatsächlichen Kollision führen würde.

Beispielsweise bei der Bearbeitung von Einzelstücken, von Kleinserien, im Formenbau und/oder der Bearbeitung besonders hochwertiger Werkstücke aus teuren Werkstoffen sollte das erste Teil regelmäßig ein Gutteil sein. Dies führt häufig zu einem eher vorsichtigen Agieren des Maschinenbedieners. Dies führt insgesamt zu erhöhtem Zeitaufwand.

Vor diesem Hintergrund liegt der vorliegenden Offenbarung die Aufgabe zugrunde, ein System und ein Verfahren zur maschinennahen Simulation des Programmablaufs bei einer NC-gesteuerten Werkzeugmaschine anzugeben, die eine Erhöhung der Produktivität einer Werkzeugmaschine erlauben und gleichzeitig Sicherheitsaspekte berücksichtigen.

Gemäß einem ersten Aspekt bezieht sich die vorliegende Offenbarung auf ein System zur maschinennahen Simulation des Programmablaufs bei einer NC-gesteuerten Werkzeugmaschine, das Folgendes aufweist:
- eine Werkzeugmaschine mit einem Werkzeughalter und einer Werkstückaufnahme, die numerisch gesteuert in zumindest drei Achsen relativ zueinander verfahrbar sind,
- eine der Werkzeugmaschine zugeordnete Maschinensteuereinheit, die Bewegungen der zumindest drei Achsen steuert,
   wobei die Maschinensteuereinheit ein Bearbeitungsprogramm abarbeitet und auf Basis von Bearbeitungsprogrammdaten Maschinensteuerdaten für die zumindest drei Achsen erzeugt, die als Achssteuerdaten den zumindest drei Achsen zur Bearbeitung eines realen Werkstücks in einer ersten Zeitebene zuführbar sind,
- eine mit der Maschinensteuereinheit über eine Datenschnittstelle gekoppelte Simulationseinheit, die unter Umgehung der Bearbeitungsprogrammdaten auf die von der Maschinensteuereinheit erzeugten Maschinensteuerdaten zugreift und zu Simulationszwecken zur Bearbeitung eines virtuellen Werkstücks in einer zweiten Zeitebene verarbeitet, und
- eine Bedienerschnittstelle mit einem Steuerelement, das bedarfsweise die Übermittlung der Achssteuerdaten an die zumindest drei Achsen unterbricht und einen Direktsimulationsmodus der Simulationseinheit aktiviert, in dem die Simulationseinheit auf die Maschinensteuerdaten zugreift und analog zu der Bearbeitung des realen Werkstücks eine Bearbeitung des virtuellen Werkstücks in der ersten Zeitebene durchführt.

Auf diese Weise kann also bedarfsweise, etwa durch eine Bedienereingabe, vor oder während einer realen Bearbeitung eine Unterbrechung erfolgen, die gerade keine Unterbrechung der virtuellen Bearbeitung zur Folge hat. Ganz im Gegenteil ergibt sich ein nahtloser oder nahezu nahtloser Übergang zwischen der realen Bearbeitung und dem Direktsimulationsmodus.

Die Unterbrechung der Übermittlung der Achssteuerdaten an die zumindest drei Achsen erlaubt eine Unterbrechung der Bearbeitung des realen Werkstücks.

Befürchtet beispielsweise ein Bediener bei der Einrichtung und Arbeitsvorbereitung vor der realen Bearbeitung, dass eine Kollision o. ä. drohen kann, lässt sich ein Einfahrprozess vor der eigentlichen Bearbeitung im Direktsimulationsmodus zu Testzwecken durchführen. Erkennt beispielsweise ein Bediener während der Bearbeitung, dass eine Kollision o. ä. droht, kann über das Steuerelement (beispielsweise SoftwareSchalter oder Hardware-Schalter) der Direktsimulationsmodus aktiviert werden. Hierdurch wird die Bewegung der Achsen der Werkzeugmaschine gar nicht erst aktiviert bzw. gestoppt. Gleichwohl wird das Bearbeitungsprogramm weiter abgearbeitet. Die auf diese Weise erzeugten Maschinensteuerdaten und Achssteuerdaten werden jedoch nicht in der realen Ebene, sondern in der virtuellen Ebene genutzt. Auf diese Weise kann etwa im Falle eines Verdachts einer drohenden Kollision oder einer anderen drohenden Betriebsstörung die Bearbeitung zumindest auf der Simulationsebene fortgeführt werden.

Im Direktsimulationsmodus geht es also nicht unbedingt darum, auf der zweiten Zeitebene eine virtuelle Bearbeitung durchzuführen, um drohende Kollisionen in der realen Welt zu erfassen. Stattdessen geht es darum, eine in der realen Welt geplante oder gestartete Bearbeitung zumindest in der virtuellen Welt durchzuführen oder abzuschließen. Dies soll so maschinennah wie möglich erfolgen, ohne dass es jedoch zu einer realen Bearbeitung (Achsbewegungen, Spanabtrag und dergleichen) kommt.

Im Direktsimulationsmodus geht es also nicht unbedingt darum, das Verhalten der Werkzeugmaschine vollständig über den digitalen Zwilling abzubilden. Stattdessen geht es darum, zumindest Teile der Datenverarbeitung weiterhin durch die (reale) maschinenseitige Maschinensteuereinheit durchzuführen, um mit der Simulationseinheit auf die dabei generierten (realen) Maschinensteuerdaten und Achssteuerdaten zugreifen zu können.

Die Maschinensteuereinheit ist üblicherweise eine NC-Steuerung oder CNC-Steuerung der Werkzeugmaschine. Das Bearbeitungsprogramm ist üblicherweise ein NC-Programm. Die Maschinensteuerdaten sind üblicherweise die von der CNC-Steuerung bei der Abarbeitung des NC-Programms erzeugten interpolierten Steuerdaten. Die Maschinensteuerdaten werden den realen Achsen der Werkzeugmaschine als Achssteuerdaten zugeführt.

Im Direktsimulationsmodus kann die Simulationseinheit nahtlos auf die Maschinensteuerdaten bzw. die Achssteuerdaten zugreifen. Auf diese Weise kann die Simulation maschinennah erfolgen. Maschinennah im Sinne der vorliegenden Offenbarung heißt, dass zur Simulation die in die Werkzeugmaschine integrierte Datenverarbeitung durch die Maschinensteuereinheit genutzt wird. Es geht also gerade nicht darum, auch das Verhalten der Maschinensteuereinheit in einem digitalen Zwilling zu simulieren.

Bei der ersten Zeitebene handelt sich üblicherweise um die reale Bearbeitung. Bei der zweiten Zeitebene handelt es sich üblicherweise um eine leicht vorauseilende Simulation, die insbesondere zu Zwecken der Kollisionsvermeidung genutzt wird. Im Direktsimulationsmodus geht es darum, in der ersten Zeitebene das Maschinenverhalten (soweit möglich) möglichst genau zu erfassen und möglichst genau wiederzugeben.

Die Bedienerschnittstelle kann auch als HMI-Modul (Human-Machine-Interface, Mensch-Maschine-Schnittstelle) bezeichnet werden. Die Bedienerschnittstelle umfasst weist zumindest ein Steuerelement auf, zum Beispiel üblicherweise ein TouchPanel und/oder zumindest einen Berührbildschirm. Es versteht sich, dass auch diskrete Hardwareschalter vorstellbar sind.

Während einer realen Bearbeitung nutzt die Simulationseinheit interpolierte Maschinensteuerdaten und Achssteuerdaten für die Simulation in der zweiten Zeitebene zur Kollisionsvermeidung. Dies umfasst üblicherweise Soll-Positionen für die einzelnen Achsen. Dies kann auch eine Rückkopplung von (realen) Ist-Positionen umfassen. Im Direktsimulationsmodus ist die Ansteuerung der Achsen unterbrochen, etwaige Achsbewegungen werden unterbunden. Gleichwohl kann das Bearbeitungsprogramm vollständig abgearbeitet werden, wobei für den Bediener auf der virtuellen Ebene das Maschinenverhalten detailliert sichtbar und nachvollziehbar wird. Hinsichtlich der Rücckopplung (realer) Ist-Positionen kann zu diesen Zwecken bedarfsweise angenommen werden, dass die Ist-Positionen der einzelnen Achsen den Soll-Positionen entsprechen.

Gemäß einer beispielhaften Ausgestaltung eilt die zweite Zeitebene der ersten Zeitebene voraus. Der Versatz kann je nach gewählter Bearbeitungsaufgabe und gegebenen Beschleunigungen variieren. Beispielhaft beträgt der Versatz etwa 0,8 Sekunden. Auf diese Weise bleibt aus Sicht der Kollisionsüberwachung und Kollisionsvermeidung üblicherweise genug Zeit, um Achsen und sonstige Freiheitsgrade der Werkzeugmaschine zu stoppen. Üblicherweise umfasst die Abarbeitung des Bearbeitungsprogramms durch die Maschinensteuereinheit auch ein Befüllen eines Pufferspeichers (sogenannter Look-Ahead Speicher), der zukünftige Bearbeitungsschritte enthält. Die Simulationseinheit kann direkt oder indirekt auf Daten zugreifen, die in diesem Pufferspeicher hinterlegt sind. Auf diese Weise kann eine vorauseilende Simulation bereitgestellt werden. Es versteht sich, dass die erste Zeitebene und die zweite Zeitebene auch parallel oder nahezu parallel ablaufen können, wenn ein Versatzparameter entsprechend definiert ist.

Gemäß einer weiteren beispielhaften Ausgestaltung sind im Direktsimulationsmodus die zumindest drei Achsen der Werkzeugmaschine inaktiv gesetzt. Mit anderen Worten wird die Bewegung der Achsen während des Betriebs durch Betätigung des Schalters unterbrochen. Die Achsen werden steuerungstechnisch "abgeworfen".

Gemäß einer weiteren beispielhaften Ausgestaltung ist der Direktsimulationsmodus von einem Maschinenbediener durch das als Hardwareschalter oder Softwareschalter gestaltete Steuerelement aktivierbar. Ein solcher Schalter kann grundsätzlich als diskretes Element vorgesehen sein. Der Schalter kann auch als virtueller Schalter auf einem Berührbildschirm oder Touchpanel eingeblendet oder anderweitig hervorgehoben sein. Durch Betätigung des Steuerelements wird der Direktsimulationsmodus aktiviert, Maschinensteuerdaten bzw. Achssteuerdaten, die eigentlich für die reale Bearbeitung vorgesehen sind, werden sodann ausschließlich von der Simulationseinheit verarbeitet, um dort die Bearbeitung auf der virtuellen Ebene durchzuführen bzw. fortzusetzen.

Gemäß einer weiteren beispielhaften Ausgestaltung ist der Direktsimulationsmodus vor einer Bearbeitung eines Werkstücks vor der Abarbeitung des Bearbeitungsprogramms durch die Werkzeugmaschine aktivierbar, so dass im Direktsimulationsmodus die Bearbeitung des Werkstücks (zunächst) unterbleibt.

Gemäß einer weiteren beispielhaften Ausgestaltung ist der Direktsimulationsmodus während einer Bearbeitung eines Werkstücks während der Abarbeitung des Bearbeitungsprogramms durch die Werkzeugmaschine aktivierbar, so dass im Direktsimulationsmodus die Bearbeitung des Werkstücks unterbrochen ist. Dies trifft auf das reale Werkstück zu. Auf diese Weise lassen sich beispielsweise Beschädigungen durch drohende Kollisionen oder dergleichen verhindern, wenn rechtzeitig das Steuerelement zur Aktivierung des Direktsimulationsmodus betätigt wird.

Gemäß einer weiteren beispielhaften Ausgestaltung greift die Simulationseinheit im Direktsimulationsmodus für die Simulation der Bearbeitung des virtuellen Werkstücks auf Maschinensteuerdaten zurück, die Achssteuerdaten umfassen, bei denen bei stillstehenden Achsen Soll-Positionen als Ist-Positionen dienen. Auf diese Weise können grundsätzlich bei der Maschinensteuereinheit implementierte Regelkreise und ähnliche Rückkopplungen auch im Direktsimulationsmodus genutzt werden. Es wird angestrebt, die Abarbeitung des Bearbeitungsprogramms möglichst vollständig mit der Maschinensteuereinheit durchzuführen, wobei so spät wie möglich in der Prozesskette die Übertragung zur Simulationseinheit angestrebt wird.

Gemäß einer weiteren beispielhaften Ausgestaltung greift die Simulationseinheit im Direktsimulationsmodus für die Simulation der Bearbeitung des virtuellen Werkstücks auf Maschinensteuerdaten zurück, die zumindest in der Maschinensteuereinheit hinterlegte tatsächliche Werkzeuggeometriedaten umfassen. Auf diese Weise können Daten auf der Simulationsebene genutzt werden, die direkt von der Werkzeugmaschine kommen.

Gemäß einer weiteren beispielhaften Ausgestaltung greift die Simulationseinheit im Direktsimulationsmodus für die Simulation der Bearbeitung des virtuellen Werkstücks auf Maschinensteuerdaten zurück, die zumindest in der Maschinensteuereinheit hinterlegte Nullpunktverschiebungsdaten umfassen. Auch auf diese Weise kann die Simulation im Direktsimulationsmodus in hohem Maße auf von der Werkzeugmaschine selbst bereitgestellte Daten zurückgreifen.

Gemäß einer weiteren beispielhaften Ausgestaltung umfasst die Maschinensteuereinheit eine erste Datenverarbeitungseinrichtung, die in die Werkzeugmaschine integriert ist, wobei die Simulationseinheit eine zweite Datenverarbeitungseinrichtung umfasst, die bei der Werkzeugmaschine oder von der Werkzeugmaschine entfernt angeordnet ist. Somit sind zumindest zwei Datenverarbeitungseinrichtungen vorgesehen, die funktional und/oder strukturell separierbar sind. Gleichwohl gibt es einen Informationsaustausch zwischen den Datenverarbeitungseinrichtungen, damit die zweite Datenverarbeitungseinrichtung (der Simulationseinheit) möglichst weitgehend auf von der Werkzeugmaschine bereitgestellte Daten zurückgreifen kann.

Gemäß einer weiteren beispielhaften Ausgestaltung ist ein Zugriff auf die Datenverarbeitungseinrichtung der Simulationseinheit über eine Bedienerschnittstelle der Werkzeugmaschine und/oder eine von der Werkzeugmaschine beabstandete Bedienerschnittstelle ermöglicht. Mit anderen Worten kann also ein Maschinenbediener bei der Bedienung der Werkzeugmaschine Zugriff auf von der Simulationseinheit bereitgestellte Daten haben. Dies vereinfacht bei der Aktivierung des Direktsimulationsmodus aus Sicht des Bedieners den Übergang zwischen der Beobachtung der realen Bearbeitung und der Beobachtung der diese ersetzenden virtuellen Bearbeitung.

Gemäß einer weiteren beispielhaften Ausgestaltung umfasst die Bedienerschnittstelle der Werkzeugmaschine eine dritte Datenverarbeitungseinrichtung, die insbesondere in die Werkzeugmaschine integriert ist, wobei ein Zugriff auf Funktionen der ersten Datenverarbeitungseinrichtung der Maschinensteuerung für einen Bediener unter Nutzung der dritten Datenverarbeitungseinrichtung der Bedienerschnittstelle erfolgt. Gemäß dieser Ausgestaltung dient die dritte Datenverarbeitungseinrichtung insbesondere zur Visualisierung mit der Visualisierungseinheit. Auf diese Weise können dem Bediener über die Bedienerschnittstelle Informationen präsentiert werden. Diese Informationen können sich auf Simulationsdaten beziehen, die von der zweiten Datenverarbeitungseinrichtung bereitgestellt und von der dritten Datenverarbeitungseinrichtung visualisiert werden.

Auf diese Weise wird für eine saubere Trennung der verschiedenen Funktionen gesorgt. Im Rahmen der vorliegenden Offenbarung wird die Datenverarbeitungseinrichtung der Maschinensteuereinheit als erste Datenverarbeitungseinrichtung bezeichnet, wobei die Datenverarbeitungseinrichtung der Simulationseinheit als zweite Datenverarbeitungseinrichtung bezeichnet wird, und wobei die Datenverarbeitungseinrichtung der Bedienerschnittstelle (bzw. deren Visualisierungseinheit) als dritte Datenverarbeitungseinrichtung bezeichnet wird. Die Bezeichnungen "erste", "zweite" und "dritte" dienen primär zur Unterscheidung und sollen keine Rangfolge oder Reihenfolge definieren.

Gemäß einer weiteren beispielhaften Ausgestaltung erfolgt ein Austausch von Maschinensteuerdaten zwischen der ersten Datenverarbeitungseinrichtung der Maschinensteuerung und der zweiten Datenverarbeitungseinrichtung der Simulationseinheit direkt über die Datenschnittstelle, insbesondere unter Umgehung der dritten Datenverarbeitungseinrichtung. Dies hat den Vorteil, dass relevante Daten, die sich auf den Betrieb der Werkzeugmaschine beziehen, schnell und ohne Umwege ausgetauscht werden können. Auch dies ermöglicht einen schnellen und möglichst nahtlosen Übergang zwischen der realen Bearbeitung und der virtuellen Bearbeitung im Direktsimulationsmodus, wenn das Steuerelement (Schalter oder dergleichen) betätigt wird.

Gemäß einem weiteren Aspekt bezieht sich die vorliegende Offenbarung auf ein Verfahren zur maschinennahen Simulation des Programmablaufs bei NC-gesteuerten Werkzeugmaschinen, mit den folgenden Schritten:
- Bereitstellung einer Werkzeugmaschine mit einem Werkzeughalter und einer Werkstückaufnahme, die numerisch gesteuert in zumindest drei Achsen relativ zueinander verfahrbar sind, und mit einer Maschinensteuereinheit, die Bewegungen der zumindest drei Achsen steuert,
- Abarbeitung eines Bearbeitungsprogramms zur Bearbeitung eines realen Werkstücks durch die Maschinensteuereinheit, umfassend Erzeugung von Maschinensteuerdaten auf Basis von Bearbeitungsprogrammdaten für die zumindest drei Achsen, wobei die Maschinensteuerdaten als Achssteuerdaten den zumindest drei Achsen zur Bearbeitung eines realen Werkstücks in einer ersten Zeitebene zugeführt werden,
- parallel zur Abarbeitung des Bearbeitungsprogramms, Zugreifen auf die von der Maschinensteuereinheit erzeugten Maschinensteuerdaten unter Umgehung der Bearbeitungsprogrammdaten mit einer mit der Steuereinheit über eine Datenschnittstelle gekoppelten Simulationseinheit und Verarbeiten der Maschinensteuerdaten zur Bearbeitung eines virtuellen Werkstücks in einer zweiten Zeitebene, und
- im Falle der Betätigung eines Steuerelements einer Bedienerschnittstelle, Unterbrechung der Übermittlung der Achssteuerdaten an die zumindest drei Achsen und Aktivierung eines Direktsimulationsmodus der Simulationseinheit, in dem die Simulationseinheit auf die Maschinensteuerdaten zugreift und analog zu der Bearbeitung des realen Werkstücks eine Bearbeitung des virtuellen Werkstücks in der ersten Zeitebene durchführt.

Die Unterbrechung der Übermittlung der Achssteuerdaten an die zumindest drei Achsen erlaubt eine Unterbrechung der Bearbeitung des realen Werkstücks.

Gemäß einer beispielhaften Ausgestaltung des Verfahrens ist der Direktsimulationsmodus vor einer Bearbeitung eines Werkstücks vor der Abarbeitung des Bearbeitungsprogramms durch die Werkzeugmaschine aktivierbar, so dass im Direktsimulationsmodus die Bearbeitung des Werkstücks unterbleibt.

Gemäß einer beispielhaften Ausgestaltung des Verfahrens ist der Direktsimulationsmodus während einer Bearbeitung eines Werkstücks während der Abarbeitung des Bearbeitungsprogramms durch die Werkzeugmaschine aktivierbar, so dass im Direktsimulationsmodus die Bearbeitung des Werkstücks unterbrochen wird.

Gemäß einer weiteren beispielhaften Ausgestaltung des Verfahrens wird im Direktsimulationsmodus für die Simulation der Bearbeitung des virtuellen Werkstücks auf Maschinensteuerdaten zurückgegriffen, die Achssteuerdaten umfassen, bei denen bei stillstehenden Achsen Soll-Positionen als Ist-Positionen dienen. Auf diese Weise kann das Bearbeitungsprogramm auf der Werkzeugmaschine vollständig durch die Maschinensteuereinheit abgearbeitet werden, ohne dass die Achsen im Direktsimulationsmodus aktiv sind. Somit kann die Simulationseinheit in hohem Maße auf direkt von der Werkzeugmaschine bereitgestellte und verarbeitete Daten zugreifen.

Es versteht sich, dass die vorstehend genannten und die nachstehend noch zu erläuternden Merkmale der Offenbarung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile ergeben sich aus der nachfolgenden Beschreibung mehrerer bevorzugter Ausführungsbeispiele unter Bezugnahme auf die Zeichnungen. Es zeigen:
- Fig. 1:: eine perspektivische Ansicht einer Werkzeugmaschine mit Bedienerschnittstelle;
- Fig. 2: eine vereinfachte frontale Ansicht der Anordnung gemäß Fig. 2 mit vergrößerter Darstellung der Bedienerschnittstelle;
- Fig. 3:: eine schematische Darstellung eines Systems zur maschinennahen Simulation des Programmablaufs bei einer Werkzeugmaschine zur Veranschaulichung der Topologie;
- Fig. 4:: eine schematische Ansicht zur Veranschaulichung einer Synchronisierung zwischen einer realen Bearbeitung in einer ersten Zeitebene und einer parallelen Simulation, die eine Bearbeitung in einer zweiten Zeitebene umfasst;
- Fig. 5:: eine auf Fig. 4 beruhende Ansicht zur Veranschaulichung eines Direktsimulationsmodus, bei dem die reale Bearbeitung unterbrochen wird; und
- Fig. 6:: ein vereinfachtes Blockdiagramm zur Veranschaulichung einer beispielhaften Ausgestaltung eines Verfahrens zur maschinennahen Simulation des Programmablaufs bei NC-gesteuerten Werkzeugmaschinen.

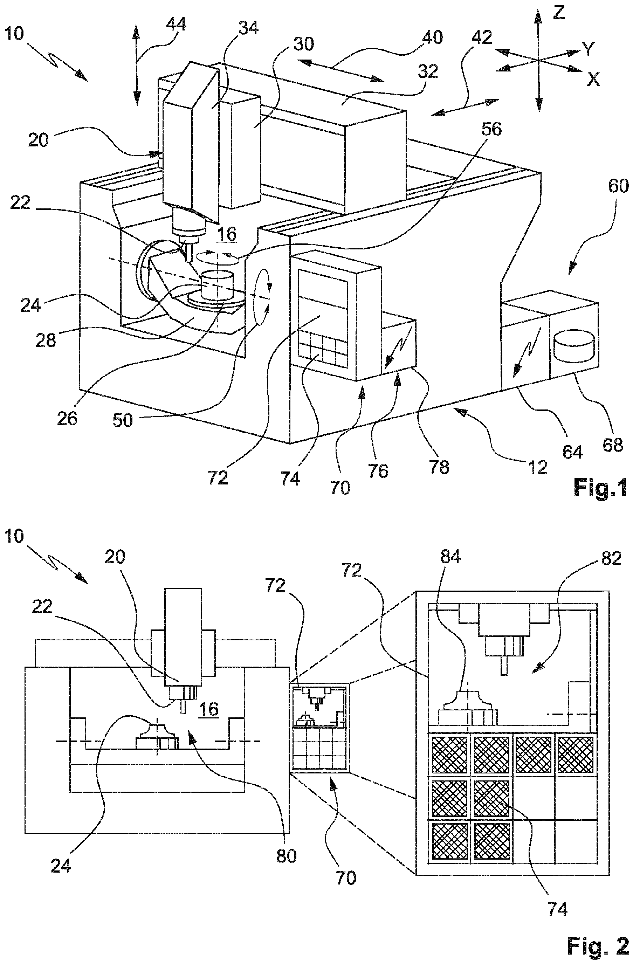

Fig. 1 veranschaulicht anhand einer perspektivischen Darstellung die Grundstruktur einer insgesamt mit 10 bezeichnete Werkzeugmaschine. In Fig. 1 ist die Werkzeugmaschine 10 als sogenannte Gantry-Maschine gestaltet. Dies ist nicht einschränkend zu verstehen. Es sind auch Gestaltungen in Portalbauweise (beispielsweise mit stehendem Portal), in Fahrständerbauweise, oder dergleichen vorstellbar.

In Fig. 1 ist aus Veranschaulichungsgründen ein kartesisches Koordinatensystem X-Y-Z dargestellt. Das Koordinatensystem dient zur Veranschaulichung grundlegender Orientierungen und Bewegungsachsen der Werkzeugmaschine 10 sowie von deren Komponenten. Eine mit X bezeichnete Achse kennzeichnet allgemein eine Längserstreckung. Eine mit Y bezeichnete kennzeichnet allgemein eine Tiefenerstreckung. Im Ausführungsbeispiel definieren die Achsen X und Y gemeinsam eine Horizontalebene. Eine mit Z bezeichnete Achse kennzeichnet allgemein eine Höhenerstreckung. Das Koordinatensystem X-Y-Z dient in erster Linie zur Veranschaulichung und ist nicht in einschränkender Weise zu verstehen. Es versteht sich, dass auch andere Koordinatensysteme zur Beschreibung der Werkzeugmaschine 10 und deren Komponenten nutzbar sind. Der Fachmann kann entsprechende Transformationen vornehmen.

Im Ausführungsbeispiel gemäß Fig. 1 weist die Werkzeugmaschine 10 ein Gestell 12 auf, das auch als Basis oder Bett bezeichnet werden kann. Bei der gezeigten Gestaltung als Gantry-Maschine umfasst das Gestell 12 zwei seitliche Wangen, an deren Oberseite Führungen (Y-Führungen) ausgebildet sind. Die Werkzeugmaschine 10 definiert einen Arbeitsraum 16, in dem Werkstücke bearbeitet werden können, insbesondere durch spanabhebende Bearbeitung. Üblicherweise ist der Arbeitsraum 16 eingehaust (in Fig. 1 nicht gezeigt).

Die Werkzeugmaschine 10 umfasst eine Werkzeugspindel 20 mit einem Werkzeughalter 22, der zur Aufnahme eines Werkzeugs zur Bearbeitung eines Werkstücks 24 ausgebildet ist. Im Ausführungsbeispiel ist die Werkzeugspindel 20 vertikal orientiert. Die Werkzeugspindel 20 ist in Fig. 1 als hängende Spindel gestaltet. Werkzeuge können bei dieser Gestaltung um eine vertikal orientierte Spindelachse angetrieben werden. Die Werkzeugspindel 20 ist relativ zu einer Werkstückaufnahme 26 beweglich, um ein dort angeordnetes Werkstück 24 zu bearbeiten. Im Ausführungsbeispiel ist die Werkstückaufnahme 26 auf einer Schwenkbrücke 28 angeordnet, die beidseitig an den Wangen des Gestells 12 gelagert ist. Andere Gestaltungen sind vorstellbar.

Die Werkzeugspindel 20 ist in drei linearen Achsen relativ zur Werkstückauflage 26 verfahrbar. Zu diesem Zweck sind im Ausführungsbeispiel ein X-Schlitten 30, ein Y-Schlitten 32 und ein Z-Schlitten 34 vorgesehen. Der Y-Schlitten 32 sitzt im Ausführungsbeispiel auf den Wangen des Gestells 12. Der X-Schlitten 30 ist am Y-Schlitten 32 linear verfahrbar angeordnet. Der Z-Schlitten 34 ist am X-Schlitten 30 linear verfahrbar angeordnet. Der Z-Schlitten trägt die Werkzeugspindel 20. Der X-Schlitten 30 trägt den Z-Schlitten 34. Der Y-Schlitten 32 trägt den X-Schlitten 30.

Der X-Schlitten 30 ist in einer X-Achse 40 (X-Richtung) entlang des Y-Schlittens 32 translatorisch verfahrbar. Der Y-Schlitten 32 ist in einer Y-Achse 42 (Y-Richtung) entlang des Gestells 12 translatorisch verfahrbar. Der Z-Schlitten 34 ist in einer Z-Achse 44 (Z-Richtung) entlang des X-Schlittens 30 verfahrbar. Der Z-Schlitten 34 ist vertikal verfahrbar. Der X-Schlitten 30 und der Y-Schlitten 32 sind horizontal verfahrbar. Im Ausführungsbeispiel stellen die Schwenkbrücke 28 (A-Achse 50, vergleiche Schwenkbewegungen um die X-Achse) und die Werkstückauflage 26 (C-Achse 56, vergleiche Schwenkbewegungen um die Z-Achse) weitere (rotatorische) Bewegungsachsen bereit. Insgesamt ist mit der Werkzeugmaschine 10 eine 5-Achs-Bearbeitung möglich. Andere Gestaltungen von Werkzeugmaschine 10 sind vorstellbar, beispielsweise mit einer 4-Achs-Kinematik, einer 3-Achs-Kinematik oder dergleichen.

Die Bewegung entlang der Achsen X, Y, Z kann durch die Spindel 20 oder die Werkstückaufnahme 26 erfolgen. Wesentlich ist, dass zwischen Spindel 20 und Werkstückaufnahme 26 eine Relativbewegung zustande kommt. Es sind auch Ausführungsformen vorstellbar, bei denen beispielsweise die Bewegung entlang der Y-Achse (Pfeil 42) durch ein Verfahren der Werkstückaufnahme 26 entlang des Gestells 12 realisiert wird.

In Fig. 1 ist ferner mit 60 schematisch eine Maschinesteuereinheit angedeutet. Die Maschinensteuereinheit 60 kann auch als sogenannte NC-Steuerung oder CNC-Steuerung bezeichnet werden. Die Maschinensteuereinheit 60 ist ein inhärenter Bestandteil der Werkzeugmaschine 10 und steuert Bewegungen der Werkzeugspindel 20 und des Werkstücks 24 relativ zueinander. Die Maschinensteuereinheit 60 umfasst üblicherweise eine Datenverarbeitungseinrichtung 64 sowie einen Speicher 68, in dem beispielsweise Maschinenparameter hinterlegt sind.

Die Werkzeugmaschine 10 umfasst ferner eine Bedienerschnittstelle 70, die im Ausführungsbeispiel benachbart zum Gestell 12 angeordnet ist. Die Bedienerschnittstelle 70 ist zumindest funktional mit der Werkzeugmaschine 10 gekoppelt. Die Bedienerschnittstelle 70 umfasst im Ausführungsbeispiel eine Anzeige 72 sowie Steuerelemente/Bedienelemente, die beispielhaft als Schalter 74 gestaltet sind. Die Anzeige 72 sowie der oder die Schalter 74 und weitere Bedienelemente können beispielsweise durch einen Berührbildschirm bereitgestellt werden (Touch-Bildschirm). Im Ausführungsbeispiel ist die Anzeige 72 zur Darstellung grafischer Informationen ausgebildet, die bedarfsweise eine Visualisierung der gerade stattfindenden Bearbeitung im Arbeitsraum 16 umfassen. Dies kann eine aufwändige perspektivische Darstellung mit der Möglichkeit zur Variation der Ansichtsorientierung umfassen.

Für solche und ähnliche Zwecke ist eine Visualisierungseinheit 76 vorgesehen, die eine Datenverarbeitungseinrichtung 78 umfasst. Die Datenverarbeitungseinrichtung 64 der Maschinensteuereinheit 60 und die Datenverarbeitungseinrichtung 78 der Visualisierungseinheit 76 sind separat voneinander umgesetzt. Dies kann eine strukturelle und/oder funktionale Separierung umfassen. Mit anderen Worten ist im Ausführungsbeispiel unterschiedliche Hardware für Datenverarbeitungseinrichtung 64 der Maschinensteuereinheit 60 und die Datenverarbeitungseinrichtung 78 der Visualisierungseinheit 76 vorgesehen.

Fig. 2 zeigt eine vereinfachte frontale schematische Darstellung der Werkzeugmaschine 10 gemäß Fig. 1, wobei die Anzeige 72 der Bedienerschnittstelle 70 vergrößert dargestellt ist. Die Bearbeitung im Arbeitsraum 16 umfasst im Ausführungsbeispiel einen Antrieb des Werkzeughalters 22 durch die Werkzeugspindel 20 sowie Relativbewegungen zwischen der Werkzeugspindel 20 und dem Werkstück 24. Diese reale Bearbeitung kann auch als Ist-Bearbeitung 80 bezeichnet werden. Die mit der Anzeige 72 versehene Bedienerschnittstelle 70 kann genutzt werden, um Simulationsdaten 82 bereitzustellen. Dies umfasst die virtuelle Bearbeitung eines virtuellen Werkstücks 84, das auf der Anzeige 72 dargestellt ist. Ferner umfasst die Bedienerschnittstelle 70 einen oder mehrere Schalter 74, die kontextabhängig nutzbar sind. Im Falle eines berührungsempfindlichen oder näherungssensitiven Displays können Schalter 74 bedarfsweise eingeblendet werden. Auf diese Weise vereinfacht sich die Bedienung, da grundsätzlich nur diejenigen Schalter zur Verfügung stehen, deren Verwendung in einer aktuellen Situation sinnvoll ist.

Es versteht sich, dass die Bedienerschnittstelle 70 auch andere Schalter aufweisen kann. Dies kann auch diskrete Schalter und andere Steuerelemente (Drehregler, Joystick, Maus und Ähnliches) umfassen. Grundsätzlich kann die Simulation zur Darstellung von Simulationsdaten 82 genutzt werden, die einem Bediener einen Überblick über die Ist-Bearbeitung 80 erlauben. Dies ist beispielsweise dann von Vorteil, wenn der Arbeitsraum 16 mit Kühlschmiermittel, Spänen und dergleichen belastet und nicht gut einsehbar ist.

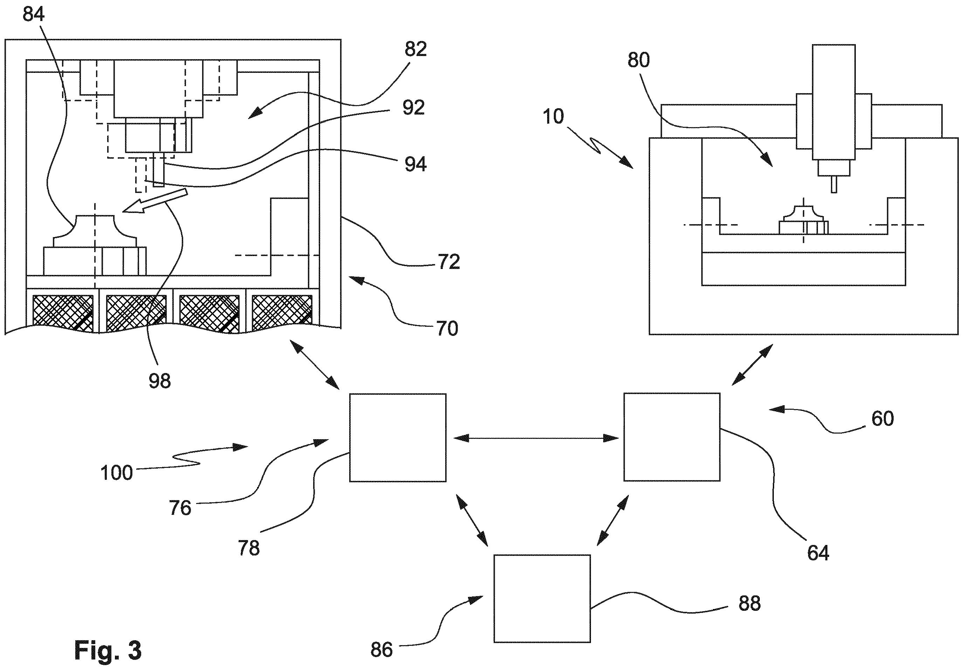

Auf Basis der Figuren 1 und Fig. 2 veranschaulicht Fig. 3 anhand einer schematischen Darstellung eine denkbare Topologie eines insgesamt mit 100 bezeichneten Systems zur maschinennahen Simulation des Programmablaufs bei einer NC-gesteuerten Werkzeugmaschine 10.

Die Topologie des Systems 100 umfasst im Ausführungsbeispiel drei Datenverarbeitungseinrichtungen, die funktional und/oder strukturell voneinander abgrenzbar sind. Die Maschinensteuereinheit 60 in der Werkzeugmaschine 10 umfasst eine erste Datenverarbeitungseinrichtung 64, die zur Steuerung der (realen) Ist-Bearbeitung 80 nutzbar ist.

Zur Bedienung und Überwachung der Werkzeugmaschine 10 ist eine Bedienerschnittstelle 70 vorgesehen, die eine weitere Datenverarbeitungseinrichtung 78 umfasst, die einer Visualisierungseinheit 76 zugeordnet ist. Die Datenverarbeitungseinrichtung 78 dient insbesondere zur Visualisierung von Bearbeitungsvorgängen. Auf diese Weise können Simulationsdaten 82 auf der Anzeige 72 dargestellt werden, die die Bearbeitung des realen Werkstücks 24 anhand einer virtuellen Bearbeitung eines virtuellen Werkstücks 84 veranschaulichen.

Schließlich ist eine weitere Datenverarbeitungseinrichtung 88 vorgesehen, die einer Simulationseinheit 86 zugehörig ist. Im Rahmen der vorliegenden Offenbarung wird die Datenverarbeitungseinrichtung 64 der Maschinensteuereinheit 60 als erste Datenbearbeitungseinrichtung bezeichnet. Die Datenverarbeitungseinrichtung 88 der Simulationseinheit 86 wird als zweite Datenverarbeitungseinrichtung bezeichnet. Die Datenverarbeitungseinrichtung 78 der Visualisierungseinheit 76 wird als dritte Datenverarbeitungseinrichtung bezeichnet. Die jeweilige Bezeichnung dient primär zur Unterscheidung und ist darüber hinaus nicht einschränkend zu verstehen.

Die Datenverarbeitungseinrichtung 88 der Simulationseinheit 86 kann der Datenverarbeitungseinrichtung 78 der Visualisierungseinheit 76 Simulationsdaten 82 zur Verfügung stellen, die durch die Visualisierungseinheit 76 darstellbar sind. Zu Zwecken der Simulation kann die Datenverarbeitungseinrichtung 88 der Simulationseinheit 86 Daten mit der Datenverarbeitungseinrichtung 64 in der maschinenseitigen Maschinensteuereinheit 60 austauschen. Gleichermaßen kann die Datenverarbeitungseinrichtung 88 der Simulationseinheit 86 Daten mit der Datenverarbeitungseinrichtung 78 der Visualisierung 76 austauschen.

Hierbei geht es beispielsweise um die Darstellung aktueller Simulationszustände und gegebenenfalls um die Erfassung und Weiterleitung von Eingaben des Bedieners über die Bedienerschnittstelle 70, die sich auf den Betrieb der Simulationseinheit 86 auswirken. Ferner kann auch ein direkter Datenaustausch zwischen der Datenverarbeitungseinrichtung 64 der Maschinensteuereinheit 60 und der Datenverarbeitungseinrichtung 78 der Visualisierungseinheit 76 erfolgen. Hier geht es beispielsweise um Informationen über einen aktuellen Betriebszustand der Werkzeugmaschine 10 und/oder über die Erfassung von Bedienereingaben über die Schnittstelle 70, die sich auf den Betrieb der Werkzeugmaschine 10 auswirken.

Die Simulationseinheit 86 kann beispielsweise zur Modellierung eines sogenannten digitalen Zwillings mit der Datenverarbeitungseinrichtung 88 dienen. Auf diese Weise kann das Verhalten der Werkzeugmaschine 10 bei der Ist-Bearbeitung 80 anhand von Simulationsdaten 82 visualisiert werden. Dies kann eine Visualisierung der Bearbeitung des virtuellen Werkstücks 84 in einer ersten Zeitebene 92 umfassen. Die erste Zeitebene 92 entspricht der Zeitebene der Ist-Bearbeitung 80. Es ist grundsätzlich auch vorstellbar, dass die Simulationsdaten 82 auch eine Visualisierung der Bearbeitung des virtuellen Werkstücks 84 in einer zweiten Zeitebene 94 erlauben. Üblicherweise läuft die zweite Zeitebene 94 der ersten Zeitebene 92 voraus. Auf diese Weise können drohende Kollisionen und Ähnliches erfasst werden. Ferner lassen sich Vorschübe 98 sowie andere Bewegungen bei der Bearbeitung visualisieren.

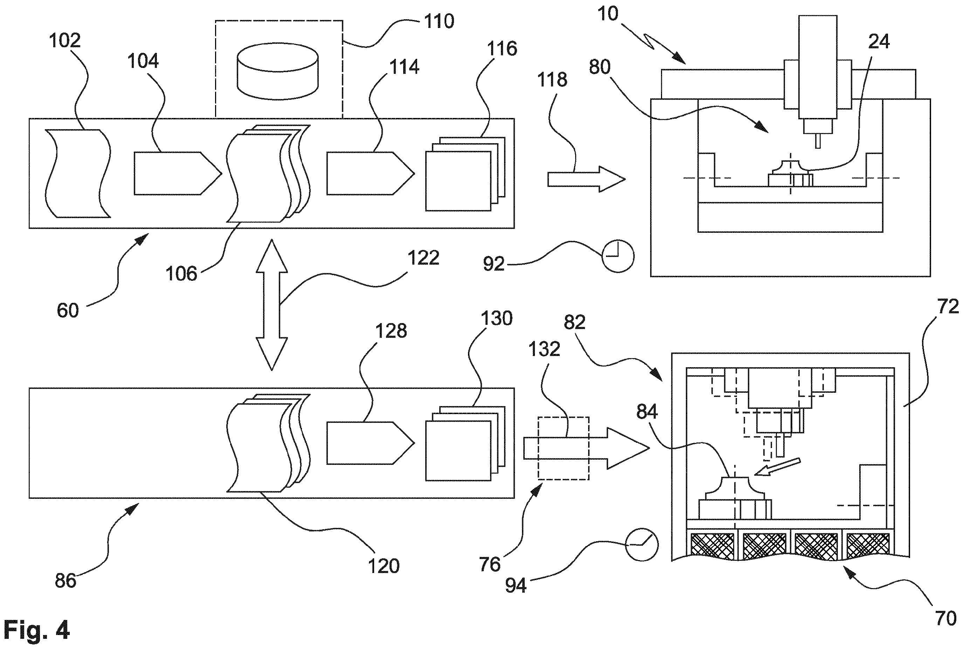

Fig. 4 veranschaulicht anhand einer schematischen Darstellung die funktionale Kopplung zwischen der Maschinensteuereinheit 60 und der Simulationseinheit 86. Die Maschinensteuereinheit 60 dient zur Abarbeitung eines Bearbeitungsprogramms, vergleiche mit 102 bezeichnete Bearbeitungsprogrammdaten. Diese werden durch die erste Datenverarbeitungseinrichtung 64 (Fig. 3) verarbeitet, vergleiche den Blockpfeil 104. Auf diese Weise lassen sich Maschinensteuerdaten 106 gewinnen. Die Maschinensteuerdaten 106 können bedarfsweise in einem sogenannten Look-Ahead Speicher 110 abgelegt werden. Auf diese Weise ist zu einem bestimmten Zeitpunkt bereits bekannt, welche weiteren Bearbeitungsschritte unmittelbar danach abgearbeitet werden und wie die Werkzeugmaschine 10 hierzu anzusteuern ist.

Die Maschinensteuerdaten 106 können weiterverarbeitet werden, vergleiche den Blockpfeil 114, beispielsweise zur Bereitstellung von Achssteuerdaten 116 für einzelne Achsen der Werkzeugmaschine 10. Achssteuerdaten 116 werden an die Achsen der Werkzeugmaschine 10 bzw. deren Antriebe übertragen, vergleiche den Pfeil 118. Auf diese Weise kann die reale Ist-Bearbeitung 80 durchgeführt werden. Es versteht sich, dass auch Regelkreise und ähnliche Rückkopplungen von der Maschinensteuereinheit 60 berücksichtigt werden können. Dies umfasst beispielsweise Ist-Positionen einzelner Achsen und sonstige Betriebsparameter der Werkzeugmaschine zu 14. Die Ist-Bearbeitung 80 des realen Werkstücks 24 erfolgt in einer ersten Zeitebene 92.

Parallel zur Maschinensteuereinheit 60 wird die Simulationseinheit 86 betrieben, um anhand von Simulationsdaten 82 die reale Ist-Bearbeitung 80 zu simulieren bzw. anhand eines digitalen Zwillings zu überwachen. Die Simulationsdaten 82 umfassen im Ausführungsbeispiel die Bearbeitung eines virtuellen Werkstücks 84. Dies erfolgt beispielhaft in einer zweiten Zeitebene 94, die der ersten Zeitebene 92 etwas vorauseilt. Auf diese Weise können drohende Kollisionen erkannt werden.

Die Simulationseinheit 86 kommuniziert über eine Datenschnittstelle 122 mit der Maschinensteuereinheit 60. Auf diese Weise kann die Simulationseinheit 86 beispielhaft auf Maschinensteuerdaten 106 zu greifen. Dies kann auch einen Zugriff auf den Look-Ahead Speicher 110 umfassen. Auf diese Weise wird der Zeitversatz zwischen der ersten Zeitebene 92 und der zweiten Zeitebene 94 ermöglicht. Maschinensteuerdaten 120 werden von der Datenverarbeitungseinrichtung 88 (Fig. 3) der Simulationseinheit 86 verarbeitet und als simulierte Achssteuerdaten 130 zur Verfügung gestellt. Sodann kann eine Übertragung (vergleiche den Pfeil 132) hin zur Bedienerschnittstelle 70 zur Anzeige 72 erfolgen. Dies kann unter Zwischenschaltung einer Visualisierungseinheit 76 mit zugehöriger Datenverarbeitungseinrichtung 78 (vergleiche Fig. 3) zur Visualisierung der Simulationsdaten erfolgen.

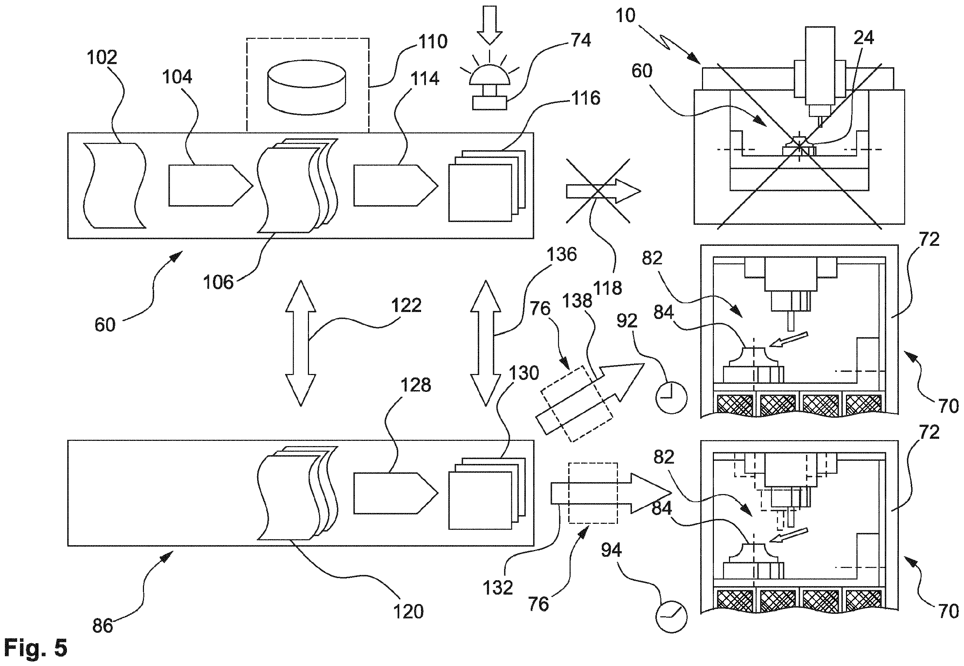

Fig. 5 veranschaulicht ausgehend von der Gestaltung gemäß Fig. 4 einen sogenannten Direktsimulationsmodus. Der Direktsimulationsmodus kann durch Betätigung eines Schalters 74 ausgelöst werden. Dies kann beispielsweise durch einen Bediener erfolgen, der bei der Beobachtung der Ist-Bearbeitung 80 eine drohende Kollision oder einen sonstigen unerwünschten Betriebszustand erkennt oder zumindest befürchtet. Sodann kann durch Betätigung des Schalters 74 die Übertragung 118 der Achssteuerdaten 116 an die Werkzeugmaschine 10 unterbrochen werden. Mit anderen Worten wird die Bearbeitung des realen Werkstücks 24 gestoppt.

Alternativ kann der Direktsimulationsmodus durch Betätigung eines Schalters 74 (oder eines anderen Steuerelements) ausgelöst werden, bevor die eigentliche Bearbeitung des realen Werkstücks 24 mit der Werkzeugmaschine 10 beginnt. Dies kann beispielsweise vor dem tatsächlichen Einfahrprozess der Werkzeugmaschine 10 erfolgen, wenn ein Bediener eine drohende Kollision oder einen sonstigen unerwünschten Betriebszustand erkennt oder zumindest befürchtet. Sodann kann durch Betätigung des Schalters 74 die Übertragung 118 der Achssteuerdaten 116 an die Werkzeugmaschine 10 unterbunden werden. Mit anderen Worten unterbleibt (zunächst) die Bearbeitung des realen Werkstücks 24.

Der Direktsimulationsmodus sieht jedoch vor, dass die maschinennahe Abarbeitung der Bearbeitungsprogrammdaten 102 durch die Maschinensteuereinheit 60 fortgeführt wird. Dies erfolgt in einem Umfang der weitgehend oder soweit wie möglich dem Betrieb der Werkzeugmaschine 10 bei der der Ist-Bearbeitung 80 des realen Werkstücks 24 entspricht. Mit anderen Worten werden also weiterhin Maschinensteuerdaten 106 und auf deren Basis Achssteuerdaten 116 mit Soll-Positionen für die einzelnen Achsen der Werkzeugmaschine 10 erzeugt. Die einzelnen Achsen werden jedoch nicht mehr auf Basis dieser Achssteuerdaten 116 betrieben.

Stattdessen greift die Simulationseinheit 86 im Direktsimulationsmodus so spät wie möglich entlang der Datenverarbeitungskette der Maschinensteuereinheit 60 auf von der Maschinensteuereinheit 60 erzeugte Daten zurück, vergleiche den Pfeil 136 in Fig. 5. Diese Daten werden sodann bei der weiteren Simulation bzw. Visualisierung der Simulationsdaten 82 zugrunde gelegt. Mit anderen Worten ist es vorstellbar, dass die Simulationseinheit 86 im Direktsimulationsmodus auf bestimmte integrierte Funktionalitäten verzichtet und stattdessen soweit wie möglich reale Daten der Maschinensteuereinheit 60 der Werkzeugmaschine 10 nutzt. Es wird also im Direktsimulationsmodus zumindest teilweise davon abgesehen, die Funktionalität der Werkzeugmaschine 10 und von deren Maschinen Steuerungseinheit 60 soweit wie möglich virtuell nachzubauen.

Die von der Maschinensteuereinheit 60 abgegriffenen Daten können gleichwohl zu Simulationszwecken genutzt werden. Dies kann beispielsweise simulierte Achsbewegungen auf Basis der Achssteuerdaten 116 umfassen. Auf diese Weise gewonnene Daten 130 können zur Bereitstellung von Simulationsdaten 82 zur Darstellung der Bearbeitung des virtuellen Werkstücks in der ersten Zeitebene 92 genutzt werden, vergleiche den Pfeil 138 in Fig. 5, der die Übertragung an die Bedienerschnittstelle 70 bzw. die Visualisierungseinheit 76 veranschaulicht. Es wird also die reale Bearbeitung des realen Werkstücks 24 in der ersten Zeitebene 92 möglichst nahtlos in eine virtuelle Bearbeitung des virtuellen Werkstücks 84 überführt, wobei die Funktionalität der Maschinensteuereinheit 60 soweit wie möglich aufrecht erhalten bleibt.

Es ist grundsätzlich vorstellbar, im Direktsimulationsmodus auch die Bereitstellung von Simulationsdaten 82 zur Darstellung der Bearbeitung des virtuellen Werkstücks 84 in der zweiten (vorauseilenden) Zeitebene 94 aufrecht zu erhalten. Hierauf kann grundsätzlich auch verzichtet werden, wenn der Aspekt der vorauseilenden Kollisionsüberwachung nicht mehr gewünscht ist.

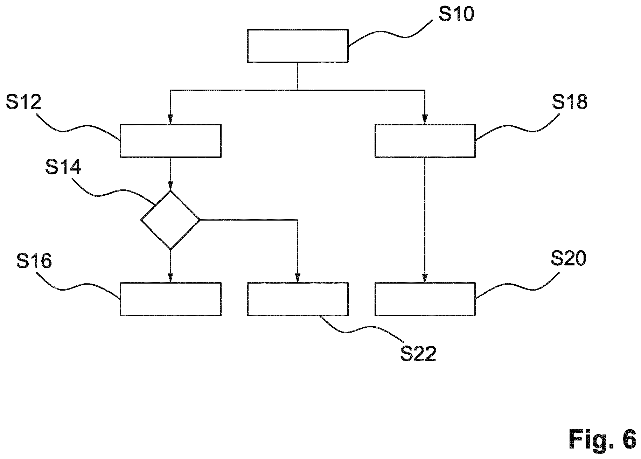

Mit Bezugnahme auf Fig. 6 wird anhand eines Blockdiagramms eine beispielhafte Ausgestaltung eines Verfahrens zur maschinennahen Simulation des Programmablaufs bei NC-gesteuerten Werkzeugmaschinen veranschaulicht. Das Verfahren umfasst einen Schritt S10, der die Bereitstellung einer Werkzeugmaschine mit mehreren numerisch gesteuerten Achsen umfasst. Ein Schritt S12 bezieht sich auf die Abarbeitung eines Bearbeitungsprogramms mit einer Maschinensteuereinheit der Werkzeugmaschine.

Beim Schritt S14 wird geprüft, ob ein Steuerelement, das einen sogenannten Direktsimulationsmodus auslöst, aktiviert ist oder nicht. Solange das Steuerelement bei S14 nicht aktiviert ist, erfolgt in einem Schritt S16 eine reale Bearbeitung eines realen Werkstücks in einer ersten Zeitebene.

Das Verfahren umfasst ferner einen Schritt S18, der die Bereitstellung einer Simulationseinheit umfasst, mit deren Hilfe das Verhalten der Werkzeugmaschine anhand eines digitalen Zwillings überwacht werden kann. Die Simulationseinheit ist dazu ausgebildet, Daten mit der Maschinensteuereinheit der Werkzeugmaschine auszutauschen. Dies dient beispielhaft zu Zwecken der Kollisionsvermeidung. Die Simulationseinheit erlaubt in einem Schritt S20 eine virtuelle Bearbeitung eines virtuellen Werkstücks in einer zweiten Zeitebene. Die zweite Zeitebene eilt der ersten Zeitebene der realen Bearbeitung beim Schritt S16 üblicherweise leicht voraus. Somit können auf der Ebene der virtuellen Bearbeitung beim Schritt S20 etwaige Kollisionen erkannt werden, die bei der realen Bearbeitung beim Schritt S16 in der ersten Zeitebene noch gar nicht aufgetreten sind.

Ein Bediener kann durch Betätigung des Steuerelements (Schritt S14) den Direktsimulationsmodus aktivieren. Im Direktsimulationsmodus wird die reale Bearbeitung des realen Werkstücks in der ersten Zeitebene (Schritt S16) unterbrochen. Stattdessen wird diese Bearbeitung in einem Schritt S22 in derselben (ersten) Zeitebene durch eine virtuelle Bearbeitung ersetzt. Dabei wird soweit wie möglich auf Maschinensteuerdaten und Achssteuerdaten zurückgegriffen, die die Maschinensteuereinheit der Werkzeugmaschine bereitstellt. Die Bearbeitung in der ersten Zeitebene wird also simuliert, es wird jedoch bewusst davon abgesehen, auch die Maschinensteuereinheit umfassend zu simulieren. Dies erlaubt eine virtuelle maschinennahe Fortsetzung oder Durchführung der realen Bearbeitung, ohne dass die Gefahr von Kollisionen oder ähnlichem droht.

## Patentansprüche

1. System (100) zur maschinennahen Simulation des Programmablaufs bei einer NC-gesteuerten Werkzeugmaschine (10), das Folgendes aufweist:
- eine Werkzeugmaschine (10) mit einem Werkzeughalter (22) und einer Werkstückaufnahme (26), die numerisch gesteuert in zumindest drei Achsen (40, 42, 44) relativ zueinander verfahrbar sind,
- eine der Werkzeugmaschine (10) zugeordnete Maschinensteuereinheit (60), die Bewegungen der zumindest drei Achsen (40, 42, 44) steuert,
wobei die Maschinensteuereinheit (60) ein Bearbeitungsprogramm abarbeitet und auf Basis von Bearbeitungsprogrammdaten (102) Maschinensteuerdaten (106) für die zumindest drei Achsen (40, 42, 44) erzeugt, die als Achssteuerdaten (116) den zumindest drei Achsen (40, 42, 44) zur Bearbeitung eines realen Werkstücks (24) in einer ersten Zeitebene (92) zuführbar sind,
- eine mit der Maschinensteuereinheit (60) über eine Datenschnittstelle (122) gekoppelte Simulationseinheit (86), die unter Umgehung der Bearbeitungsprogrammdaten (102) auf die von der Maschinensteuereinheit (60) erzeugten Maschinensteuerdaten (106) zugreift und zu Simulationszwecken zur Bearbeitung eines virtuellen Werkstücks (84) in einer zweiten Zeitebene (94) verarbeitet, und
- eine Bedienerschnittstelle (70) mit einem Steuerelement, das bedarfsweise die Übermittlung der Achssteuerdaten (116) an die zumindest drei Achsen (40, 42, 44) unterbricht und einen Direktsimulationsmodus der Simulationseinheit (86) aktiviert, in dem die Simulationseinheit (86) auf die Maschinensteuerdaten (106) zugreift und analog zu der Bearbeitung des realen Werkstücks (24) eine Bearbeitung des virtuellen Werkstücks (84) in der ersten Zeitebene (92) durchführt.

2. System (100) nach Anspruch 1,
wobei die zweite Zeitebene (94) der ersten Zeitebene (92) vorauseilt.

3. System (100) nach Anspruch 1 oder 2,
wobei im Direktsimulationsmodus die zumindest drei Achsen (40, 42, 44) der Werkzeugmaschine (10) inaktiv gesetzt sind.

4. System (100) nach einem der Ansprüche 1-3,
wobei der Direktsimulationsmodus von einem Maschinenbediener durch das als Hardwareschalter oder Softwareschalter (74) gestaltete Steuerelement aktivierbar ist.

5. System (100) nach einem der Ansprüche 1-4,
wobei der Direktsimulationsmodus vor einer Bearbeitung eines Werkstücks (24) vor der Abarbeitung des Bearbeitungsprogramms durch die Werkzeugmaschine (10) aktivierbar ist, so dass im Direktsimulationsmodus die Bearbeitung des Werkstücks (24) unterbleibt, und/oder
wobei der Direktsimulationsmodus während einer Bearbeitung eines Werkstücks (24) während der Abarbeitung des Bearbeitungsprogramms durch die Werkzeugmaschine (10) aktivierbar ist, so dass im Direktsimulationsmodus die Bearbeitung des Werkstücks (24) unterbrochen ist.

6. System (100) nach einem der Ansprüche 1-5,
wobei die Simulationseinheit (86) im Direktsimulationsmodus für die Simulation der Bearbeitung des virtuellen Werkstücks (84) auf Maschinensteuerdaten (106) zurückgreift, die Achssteuerdaten (116) umfassen, bei denen bei stillstehenden Achsen (40, 42, 44) Soll-Positionen als Ist-Positionen dienen.

7. System (100) nach einem der Ansprüche 1-6,
wobei die Simulationseinheit (86) im Direktsimulationsmodus für die Simulation der Bearbeitung des virtuellen Werkstücks (84) auf Maschinensteuerdaten (106) zurückgreift, die zumindest in der Maschinensteuereinheit (60) hinterlegte tatsächliche Werkzeuggeometriedaten umfassen.

8. System (100) nach einem der Ansprüche 1-7,
wobei die Simulationseinheit (86) im Direktsimulationsmodus für die Simulation der Bearbeitung des virtuellen Werkstücks (84) auf Maschinensteuerdaten (106) zurückgreift, die zumindest in der Maschinensteuereinheit (60) hinterlegte Nullpunktverschiebungsdaten umfassen.

9. System (100) nach einem der Ansprüche 1-8,
wobei die Maschinensteuereinheit (60) eine erste Datenverarbeitungseinrichtung (64) umfasst (64), die in die Werkzeugmaschine (10) integriert ist, und
wobei die Simulationseinheit (86) eine zweite Datenverarbeitungseinrichtung (88) umfasst, die bei der Werkzeugmaschine (10) oder von der Werkzeugmaschine (10) entfernt angeordnet ist.

10. System (100) nach Anspruch 9,
wobei ein Zugriff auf die Datenverarbeitungseinrichtung (88) der Simulationseinheit (86) über eine Bedienerschnittstelle (70) der Werkzeugmaschine (10) und/oder eine von der Werkzeugmaschine (10) beabstandete Bedienerschnittstelle (70) ermöglicht ist.

11. System (100) nach Anspruch 9 oder 10,
wobei die Bedienerschnittstelle (70) der Werkzeugmaschine (10) eine dritte Datenverarbeitungseinrichtung (78) umfasst, die insbesondere in die Werkzeugmaschine (10) integriert ist, und
wobei ein Zugriff auf Funktionen der ersten Datenverarbeitungseinrichtung (64) der Maschinensteuereinheit (60) für einen Bediener unter Nutzung der dritten Datenverarbeitungseinrichtung (78) der Bedienerschnittstelle (70) erfolgt.

12. System (100) nach Anspruch 11,
wobei ein Austausch von Maschinensteuerdaten (106) zwischen der ersten Datenverarbeitungseinrichtung (64) der Maschinensteuereinheit (60) und der zweiten Datenverarbeitungseinrichtung (88) der Simulationseinheit (86) direkt über die Datenschnittstelle (122) erfolgt, insbesondere unter Umgehung der dritten Datenverarbeitungseinrichtung (78).

13. Verfahren zur maschinennahen Simulation des Programmablaufs bei NC-gesteuerten Werkzeugmaschinen (10), mit den folgenden Schritten:
- Bereitstellung einer Werkzeugmaschine (10) mit einem Werkzeughalter (22) und einer Werkstückaufnahme (26), die numerisch gesteuert in zumindest drei Achsen (40, 42, 44) relativ zueinander verfahrbar sind, und mit einer Maschinensteuereinheit (60), die Bewegungen der zumindest drei Achsen (40, 42, 44) steuert,
- Abarbeitung eines Bearbeitungsprogramms zur Bearbeitung eines realen Werkstücks (24) durch die Maschinensteuereinheit (60), umfassend Erzeugung von Maschinensteuerdaten (106) auf Basis von Bearbeitungsprogrammdaten (102) für die zumindest drei Achsen (40, 42, 44), wobei die Maschinensteuerdaten (106) als Achssteuerdaten (116) den zumindest drei Achsen (40, 42, 44) zur Bearbeitung eines realen Werkstücks (24) in einer ersten Zeitebene (92) zugeführt werden,
- parallel zur Abarbeitung des Bearbeitungsprogramms, Zugreifen auf die von der Maschinensteuereinheit (60) erzeugten Maschinensteuerdaten (106) unter Umgehung der Bearbeitungsprogrammdaten (102) mit einer mit der Steuereinheit über eine Datenschnittstelle (122) gekoppelten Simulationseinheit (86) und Verarbeiten der Maschinensteuerdaten (106) zur Bearbeitung eines virtuellen Werkstücks (84) in einer zweiten Zeitebene (94), und
- im Falle der Betätigung eines Steuerelements einer Bedienerschnittstelle (70), Unterbrechung der Übermittlung der Achssteuerdaten (116) an die zumindest drei Achsen (40, 42, 44) und Aktivierung eines Direktsimulationsmodus der Simulationseinheit (86), in dem die Simulationseinheit (86) auf die Maschinensteuerdaten (106) zugreift und analog zu der Bearbeitung des realen Werkstücks (24) eine Bearbeitung des virtuellen Werkstücks (84) in der ersten Zeitebene (92) durchführt.

14. Verfahren nach Anspruch 13,
wobei der Direktsimulationsmodus vor einer Bearbeitung eines Werkstücks (24) vor der Abarbeitung des Bearbeitungsprogramms durch die Werkzeugmaschine (10) aktivierbar ist, so dass im Direktsimulationsmodus die Bearbeitung des Werkstücks (24) unterbleibt, und/oder
wobei der Direktsimulationsmodus während einer Bearbeitung eines Werkstücks (24) während der Abarbeitung des Bearbeitungsprogramms durch die Werkzeugmaschine (10) aktivierbar ist, so dass im Direktsimulationsmodus die Bearbeitung des Werkstücks (24) unterbrochen wird.

15. Verfahren nach Anspruch 13 oder 14,
wobei im Direktsimulationsmodus für die Simulation der Bearbeitung des virtuellen Werkstücks (84) auf Maschinensteuerdaten (106) zurückgegriffen wird, die Achssteuerdaten (116) umfassen, bei denen bei stillstehenden Achsen (40, 42, 44) Soll-Positionen als Ist-Positionen dienen.
